(19) Europäisches Patentamt
European Patent Office
Office européen des brevets

(11) **EP 1 641 839 B1**

(12) **EUROPEAN PATENT SPECIFICATION**

(45) Date of publication and mention
of the grant of the patent:
**24.07.2013 Bulletin 2013/30**

(21) Application number: **04755816.8**

(22) Date of filing: **22.06.2004**

(51) Int Cl.:
*C08F 8/00* (2006.01)   *C08K 11/00* (2006.01)

(86) International application number:
**PCT/US2004/019905**

(87) International publication number:
**WO 2005/003220 (13.01.2005 Gazette 2005/02)**

(54) **POLYMERIC COMPOSITION - CORROSION INHIBITORS**

KORROSIONSINHIBIERENDE POLYMERZUSAMMENSETZUNG

COMPOSITION POLYMERIQUE INHIBANT LA CORROSION

(84) Designated Contracting States:
**AT BE BG CH CY CZ DE DK EE ES FI FR GB GR HU IE IT LI LU MC NL PL PT RO SE SI SK TR**

(30) Priority: **25.06.2003 US 483271 P**

(43) Date of publication of application:
**05.04.2006 Bulletin 2006/14**

(73) Proprietor: **Dow Global Technologies LLC Midland, MI 48674 (US)**

(72) Inventors:
• **BISCOGLIO, Michael, B.**
**Piscataway, NJ 08854 (US)**
• **DEVLIN, Kenneth, T.**
**Bear, DE 19701 (US)**
• **RUSSELL, Patrick, M.**
**Freeland, MI 48623 (US)**
• **WRIGHT, David, P.**
**Somerset, NJ 08873 (US)**
• **CHAUDHARY, Bharat, I.**
**Princeton, NJ 08540 (US)**
• **KLIER, John**
**Belle Mead, NJ 08502 (US)**
• **BETSO, Stephen, R.**
**Asheville, NC 28803 (US)**
• **GROSS, Laurence, H.**
**Bridgewater, NJ 08807 (US)**

(74) Representative: **Hayes, Adrian Chetwynd et al Boult Wade Tennant Verulam Gardens 70 Gray's Inn Road London WC1X 8BT (GB)**

(56) References cited:
**WO-A-02/12355     US-A- 3 976 595**

**Description**

This invention relates to a polymeric composition that inhibits corrosion during the polymeric composition's processing and/or after fabricating the polymeric composition into an article of manufacture. The polymeric composition is useful for preparing wires, cables, coatings, foams, molded articles, films, fibers, adhesives, sealants, sheets, gaskets, hoses, automobile parts and trim, footwear, pipe insulation, furniture, toys, sporting goods, thermoplastic vulcanizates. The invention also relates to a moisture-crosslinkable polymeric composition that is useful for low to high voltage wire-and-cable applications.

DESCRIPTION OF THE PRIOR ART

Corrosion is an electrochemical process, which results in converting a metal from its elemental state to a combined state. A basic corrosion reaction involves the oxidation of a metal when it is exposed to an acid. The corrosion of metal equipment, while it is exposed to an acidic silanol condensation catalyst, exemplifies this basic corrosion reaction when the equipment is used to process a moisture-crosslinkable polymeric composition.

The corrosion of metal equipment has limited the implementation of various technologies involving polymeric composition containing corrosive reagents. Similarly, corrosive environments have limited the use of polymeric articles in end-use applications.

PCT Application Serial No. WO 95/17463 discloses a crosslinkable polymer composition containing a crosslinkable polymer with hydrolysable silane groups and a substituted-aromatic sulfonic-acidic silanol condensation catalyst. While WO 95/17463 teaches that the crosslinkable polymer composition may further contain conventional silanol condensation catalysts, it does identify any components to inhibit corrosion caused by the substituted-aromatic-sulfonic-acidic silanol condensation catalyst or corrosion reagents generally. Moreover, WO 95/17463 does not teach any corrosion inhibitors that also allow the substituted-aromatic-sulfonic-acidic silanol condensation catalyst to retain its catalytic performance or acid catalysts generally to retain their catalytic performance.

PCT Application Serial Nos. WO 02/12354 and WO 02/12355 disclose sulfonic acid catalysts for crosslinking polyethylene. Specifically, WO 02/12354 discloses alkylaryl and arylaklyl monosulfonic acid catalysts while WO 02/12355 discloses alkylated aryl disulfonic acid catalysts. Neither patent application teaches any component to inhibit corrosion caused by the disclosed sulfonic acid catalysts or by acidic corrosion reagents generally. Moreover, neither teaches any corrosion inhibitor that also allows the sulfonic acid catalyst to retain its catalytic performance or acid catalysts generally to retain their catalytic performance.

There is a need for a polymeric composition that inhibits corrosion during its process and/or after fabricating the polymeric composition into an article of manufacture. More specifically, there is a need for a moisture-crosslinkable polymeric composition containing an acidic silanol condensation catalyst which may be processed in conventional equipment while inhibiting corrosion of the equipment's metal surfaces.

DESCRIPTION OF THE INVENTION

The present invention is a polymeric composition comprising a polymer, a cathodic corrosion inhibitor, and an acidic corrosive reagent wherein the cathodic corrosion inhibitor inhibits corrosion that the acidic corrosive reagent would cause. The polymeric composition may further comprise a blowing agent and/or a second corrosion inhibitor. The present invention specifically also includes moisture-crosslinkable polymeric compositions. The moisture-crosslinkable compositions can be used as a coating and applied over a wire or a cable.

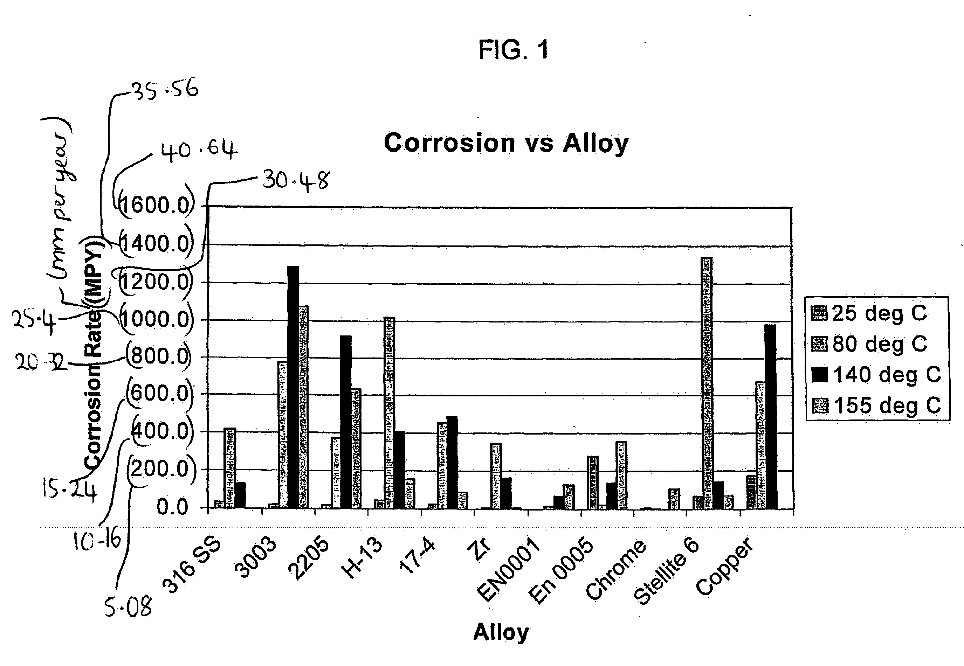

Fig. 1 shows the corrosion rate in mils per year (MPY) of a variety of metal alloy types in an alkyl aromatic sulfonic acid at four temperatures.

The invented polymeric composition comprises a polymer, a cathodic corrosion inhibitor and an acidic corrosive reagent.

The polymers include acrylamido polymers, acrylate polymers, carboxylic acid polymers, epoxy polymers, methacrylate polymers, olefinic polymers, polyamide polymers, polycarbonates, polyesters, polyurethanes, polyvinyl chloride polymers, polyvinylidene chloride polymers, siloxane polymers, styrenic polymers, thermoplastic urethanes, vinyl acetate polymers, and blends thereof Notably, polymers (including copolymers) prepared from one or more of the following monomer classes as well as their derivatives are useful in the present invention: acrylate, methacrylate, acrylamido, styrenic and vinyl acetate monomers. In addition, useful polymers can be prepared from functional monomers such as hydroxyethyl acrylate, glycidyl methacrylate, glycidyl acrylate, acrylamide and their derivatives, thereby providing crosslinking sites.

Moreover, while polyvinyl chloride polymers and polyvinylidene chloride polymers are specifically identified herein as useful for the present invention, a person of ordinary skill in the art will recognize other halogenated polymers that are useful. Those polymers are considered within the scope of the present invention.

A person of ordinary skill in the art can prepare these polymers from well-known polymerization processes. Preferentially, the polymer would be an olefinic polymer, a polymer having an acid-catalyst reactive functional group attached thereto, or a silane-functionalized polymer. More preferably, the polymer would be a silane-functionalized polymer.

Suitable olefinic polymers include polyethylene polymers, polypropylene polymers, and blends thereof.

Polyethylene polymer, as that term is used herein, is a homopolymer of ethylene or a copolymer of ethylene and a minor proportion of one or more alpha-olefins having 3 to 12 carbon atoms, and preferably 4 to 8 carbon atoms, and, optionally, a diene, or a mixture or blend of such homopolymers and copolymers. The mixture can be a mechanical blend or an in situ blend. Examples of the alpha-olefins are propylene, 1-butene, 1-hexene, 4-methyl-1-pentene, and 1-octene. The polyethylene can also be a copolymer of ethylene and an unsaturated ester such as a vinyl ester (e.g., vinyl acetate or an acrylic or methacrylic acid ester) or a copolymer of ethylene and a vinyl silane (e.g., vinyltrimethoxysilane and vinyltriethoxysilane). While copolymers of ethylene and a vinyl silane are included here as polyethylene, the copolymers are also included below as silane-functionalized polymers.

The polyethylene can be homogeneous or heterogeneous. The homogeneous polyethylenes usually have a polydispersity (Mw/Mn) in the range of 1.5 to 3.5 and an essentially uniform comonomer distribution, and are characterized by a single and relatively low melting point as measured by a differential scanning calorimeter. The heterogeneous polyethylenes usually have a polydispersity (Mw/Mn) greater than 3.5 and lack a uniform comonomer distribution. Mw is defined as weight average molecular weight, and Mn is defined as number average molecular weight.

The polyethylenes can have a density in the range of 0.860 to 0.970 gram per cubic centimeter, and preferably have a density in the range of 0.870 to 0.930 gram per cubic centimeter. They also can have a melt index in the range of 0.1 to 50 grams per 10 minutes. If the polyethylene is a homopolymer, its melt index is preferably in the range of 0.75 to 3 grams per 10 minutes. Melt index is determined under ASTM D-1238, Condition E and measured at 190 degrees Celsius and 2160 grams.

Low- or high-pressure processes can produce the polyethylenes. They can be produced in gas phase processes or in liquid phase processes (i.e., solution or slurry processes) by conventional techniques. Low pressure processes are typically run at pressures below 7mPa 1000 pounds per square inch ("psi")) whereas high-pressure processes are typically run at pressures above 105mPa (15,000 psi).

Typical catalyst systems for preparing these polyethylenes include magnesium/titanium-based catalyst systems, vanadium-based catalyst systems, chromium-based catalyst systems, metallocene catalyst systems, and other transition metal catalyst systems. Many of these catalyst systems are often referred to as Ziegler-Natta catalyst systems or Phillips catalyst systems. Useful catalyst systems include catalysts using chromium or molybdenum oxides on silica-alumina supports.

Useful polyethylenes include low density homopolymers of ethylene made by high pressure processes (HP-LDPEs), linear low density polyethylenes (LLDPEs), very low density polyethylenes (VLDPEs), ultra low density polyethylenes (ULDPEs), medium density polyethylenes (MDPEs), high density polyethylene (HDPE), and metallocene copolymers.

High-pressure processes are typically free radical initiated polymerizations and conducted in a tubular reactor or a stirred autoclave. In the tubular reactor, the pressure is within the range of 175 to 280 MPa (25,000 to 45,000 psi) and the temperature is in the range of 200 to 350 degrees Celsius. In the stirred autoclave, the pressure is in the range of 70 to 210 MPa (10,000 to 30,000 psi) and the temperatute is in the range of 175 to 250 degrees Celsius.

Copolymers comprised of ethylene and unsaturated esters are well known and can be prepared by conventional high-pressure techniques. The unsaturated esters can be alkyl acrylates, alkyl methacrylates, or vinyl carboxylates. The alkyl groups can have 1 to 8 carbon atoms and preferably have 1 to 4 carbon atoms. The carboxylate groups can have 2 to 8 carbon atoms and preferably have 2 to 5 carbon atoms. The portion of the copolymer attributed to the ester comonomer can be in the range of 5 to 50 percent by weight based on the weight of the copolymer, and is preferably in the range of 15 to 40 percent by weight. Examples of the acrylates and methacrylates are ethyl acrylate, methyl acrylate, methyl methacrylate, t-butyl acrylate, n-butyl acrylate, n-butyl methacrylate, and 2-ethylhexyl acrylate. Examples of the vinyl carboxylates are vinyl acetate, vinyl propionate, and vinyl butanoate. The melt index of the ethylene/unsaturated ester copolymers can be in the range of 0.5 to 50 grams per 10 -minutes, and is preferably in the range of 2 to 25 grams per 10 minutes.

Copolymers of ethylene and vinyl silanes may also be used. Examples of suitable silanes are vinyltrimethoxysilane and vinyltriethoxysilane. Such polymers are typically made using a high-pressure process. Use of such ethylene vinylsilane copolymers is desirable when a moisture crosslinkable composition is desired.

The VLDPE or ULDPE can be a copolymer of ethylene and one or more alpha-olefins having 3 to 12 carbon atoms and preferably 3 to 8 carbon atoms. The density of the VLDPE or ULDPE can be in the range of 0.870 to 0.915 gram per cubic centimeter. The melt index of the VLDPE or ULDPE can be in the range of 0.1 to 20 grams per 10 minutes and is preferably in the range of 0.3 to 5 grams per 10 minutes. The portion of the VLDPE or ULDPE attributed to the comonomer(s), other than ethylene, can be in the range of 1 to 49 percent by weight based on the weight of the copolymer

and is preferably in the range of 15 to 40 percent by weight.

A third comonomer can be included, e.g., another alpha-olefin or a diene such as ethylidene norbornene, butadiene, 1,4-hexadiene, or a dicyclopentadiene. Ethylene/propylene copolymers are generally referred to as EPRs and ethylene/propylene/diene terpolymers are generally referred to as an EPDM. The third comonomer can be present in an amount of 1 to 15 percent by weight based on the weight of the copolymer and is preferably present in an amount of 1 to 10 percent by weight. It is preferred that the copolymer contains two or three comonomers inclusive of ethylene.

The LLDPE can include VLDPE, ULDPE, and MDPE, which are also linear, but, generally, has a density in the range of 0.916 to 0.925 gram per cubic centimeter. It can be a copolymer of ethylene and one or more alpha-olefins having 3 to 12 carbon atoms, and preferably 3 to 8 carbon atoms. The melt index can be in the range of 1 to 20 grams per 10 minutes, and is preferably in the range of 3 to 8 grams per 10 minutes.

Any polypropylene may be used in these compositions. Examples include homopolymers of propylene, copolymers of propylene and other olefins, and terpolymers of propylene, ethylene, and dienes (e.g. norbornadiene and decadiene). Additionally, the polypropylenes may be dispersed or blended with other polymers such as EPR or EPDM. Suitable polypropylenes include TPEs, TPOs and TPVs. Examples of polypropylenes are described in POLYPROPYLENE HANDBOOK: POLYMERIZATION, CHARACTERIZATION, PROPERTIES, PROCESSING, APPLICATIONS 3-14,113-176 (E. Moore, Jr. ed., 1996).

Suitable silane-functionalized polyolefin polymers include (i) a copolymer of ethylene and a hydrolyzable silane, (ii) a copolymer of ethylene, a hydrolyzable silane, and one or more C3 or higher alpha-olefins and unsaturated esters, (iii) a homopolymer of ethylene, having a hydrolyzable silane grafted to its backbone, and (iv) a copolymer of ethylene and one or more C3 or higher alpha-olefins and unsaturated esters, having a hydrolyzable silane grafted to its backbone. Vinyl alkoxysilane is a suitable silane compound for grafting.

The cathodic corrosion inhibitors are Group IVA metals, Group VA metals, salts of the preceding metals, and metal salts of the acidic corrosive reagent. Preferably, the cathodic corrosion inhibitors are selected from the group consisting of antimony, arsenic, tin, salts of the preceding metals, and metal salts of the acidic corrosive reagent

Suitable cathodic corrosion inhibitor compounds inhibit corrosion during processing of the polymeric composition and/or after fabricating the polymeric composition into an article of manufacture. Ideally, when the acidic corrosive reagent is an acid catalyst, the cathodic corrosion inhibitor inhibits corrosion that the acid catalyst would cause while the acid catalyst retains its catalytic performance.

When the polymer is an olefinic polymer and the acidic corrosive reagent is a substituted-aromatic-sulfonic-acidic silanol condensation catalyst, the cathodic corrosion inhibitor is preferably not a conventional silanol condensation catalyst present in an amount greater than 0.78 mmoles/kilogram of the olefinic polymer. More preferably, the corrosion inhibitor is not a conventional silanol condensation catalyst. As described in WO 95/17463, conventional silanol condensation catalysts specifically include carboxylic acid salts of the metals tin, zinc, iron, lead, and cobalt. For purposes of this patent application, conventional silanol condensation catalysts shall also include hydrolysis products of alkyl tin trichlorides, organic bases, inorganic acids, and organic acids.

Suitable second corrosion inhibitors include anodic inhibitors, buffers, film formers, and blends thereof. Examples of second corrosion inhibitors useful in the present invention include amines, hydrazines, borates, carbonates, and thio-esters.

The acidic corrosive reagent is an acidic silanol condensation catalyst selected from the group consisting of (a) organic sulfonic acids and hydrolyzable precursors thereof, (b) organic phosphonic acids and hydrolyzable precursors thereof, and (c) halogen acids. Preferably, the acidic silanol condensation catalyst is an organic sulfonic acid. More preferably, the acidic silanol condensation catalyst is selected from the group consisting of alkylaryl sulfonic acids, arylalkyl sulfonic acids, and alkylated aryl disulfonic acids. Even more preferably, the acidic silanol condensation catalyst is selected from the group consisting of substituted benzene sulfonic acids and substituted naphthalene sulfonic acid. Most preferably, the acidic silanol condensation catalyst is dodecylbenzyl sulfonic acid or dinonylnapthyl sulfonic acid

The polymeric composition may further comprise a blowing agent, which may be added singly or in combination with one or more other blowing agents. The amount of blowing agent is generally added in an amount from 0.05 to 5.0 gram moles per kilogram of polymer. Preferably, the amount is from 0.2 to 3.0 gram moles per kilogram of polymer. More preferably, the amount is from 0.5 to 2.5 gram moles per kilogram of polymer.

Useful blowing agents include inorganic and organic blowing agents. Suitable inorganic blowing agents include carbon dioxide, nitrogen, argon, water, air, sulfur hexafluoride (SF6) and helium. Suitable organic blowing agents include aliphatic hydrocarbons having 1-9 carbon atoms, aliphatic alcohols having 1-3 carbon atoms, and fully and partially halogenated aliphatic hydrocarbons having 1-4 carbon atoms.

Aliphatic hydrocarbons include methane, ethane, propane, n-butane, isobutane, n-pentane, isopentane, and neopentane. Aliphatic alcohols include methanol, ethanol, n-propanol, and isopropanol. Partially and fully halogenated aliphatic hydrocarbons include fluorocarbons, chlorocarbons, and chlorofluorocarbons. -

Examples of fluorocarbons include methyl fluoride, perfluoromethane, ethyl fluoride, 1,1-difluoroethane (HFC-152a), fluoroethane (HFC-161), 1,1,1-trifluoroethane (HFC-143a), 1,1,1,2-tetrafluoroethane (HFC-134a), 1,1,2,2-tetrafuoroethane (HFC-134), 1,1,1,3,3-pentafluoropropane, pentafluoroethane (HFC-125), difluoromethane (HFC-32), perfluoroethane, 2,2-difluoropropane, 1,1,1-trifluoropropane, perfluoropropane, dichlorppropane, difluoropropane, perfluorobutane, and perfluorocyclobutane. Examples of chlorocarbons include methyl chloride, methylene chloride, ethyl chloride, and 1,1,1-trichloroethane. Examples of chlorofluorocarbons include trichloromonofluoromethane (CFC-11), dichlorodifluoromethane (CFC-12), trichlorotrifluoroethane (CFC-113), dichlorotetrafluoroethane (CFC-114), chloroheptafluoropropane, dichlorohexafluoropropane, 1,1-dichloro-1 fluoroethane (HCFC-141b), 1-chloro-1,1-difluoroethane (HCFC-142b), chlorodifluoromethane (HCFC-22), 1,1-dichloro-2,2,2-trifluoroethane (HCFC-123) and 1-chloro-1,2,2,2-tetrafluoroethane (HCFC-124).

Other suitable blowing agents include azodicarbonamide, azodiisobutyronitrile, barium azodicarboxylate, NN'-dimethyl-NN'-dinitrosoterephthalamide, benzenesulfonhydrazide, 4,4-oxybenzene sulfonyl semicarbazide, p-toluene sulfonyl semicarbazide, trihydrazino triazine, and mixtures of citric acid and sodium bicarbonate.

In addition, the composition may contain other additives such as antioxidants, lubricants, anti-blocking agents, catalysts, processing aids, brominated flame retardants, nanofillers, clays, calcium carbonate, carbon black, siloxanes/silicones/silanes, magnesium hydroxide, aluminum trihydroxide, and colorants.

In a preferred embodiment, the present invention is a polymeric composition comprising (a) a silane-functionalized polymer selected from the group consisting of (i) a copolymer of ethylene and a hydrolyzable silane, (ii) a copolymer of ethylene, a hydrolyzable silane, and one or more C3 or higher alpha-olefins and unsaturated esters, (iii) a homopolymer of ethylene, having a hydrolyzable silane grafted to its backbone, and (iv) a copolymer of ethylene and one or more C3 or higher alpha-olefins and unsaturated esters, having a hydrolyzable silane grafted to its backbone; (b) an acidic silanol condensation catalyst selected from the group consisting of alkylaryl sulfonic acids, arylalkyl sulfonic acids, and alkylated aryl disulfonic acids, wherein the polymer composition is moisture-crosslinkable; and (c) a cathodic corrosion inhibitor selected from the group consisting of antimony, arsenic, zinc, tin, cadmium, salts of the preceding metals, and metal salts of the acidic silanol condensation catalyst. In this preferred embodiment, the cathodic corrosion inhibitor is preferably not a conventional silanol condensation catalysts present in an amount greater than 0.78 mmoles/kilogram of the silane-functionalized polymer.

In another embodiment, the invention is a polymeric composition comprising a polymer having an acid-catalyst reactive functional group and a cathodic corrosion inhibitor selected from the group consisting of Group IVA metals, Group VA metals, salts of the preceding metals, and metal salts of the corrosive reagent.

In an alternate embodiment, the invention is wire or cable construction prepared by applying the polymeric composition over a wire or cable.

In a yet another embodiment, the invention is an article of manufacture prepared by applying the polymeric composition over a metal substrate. The article of manufacture can be prepared by extrusion, compression molding, injection molding, blow molding, rotational molding, calendering, thermoforming, and casting. Other methods of preparing the article of manufacture would be readily apparent to a person skilled in the art. Those methods are considered within the scope of the invention.

EXAMPLES

The following examples illustrate the invention.

Metal Alloy Corrosion Rate

Figure 1 shows the corrosion rate in mm per year (mils per year (MPY)) of a variety of metal alloy types in an alkyl aromatic sulfonic acid available from King Industries as NACURE™ B201 at four temperatures. The metal alloys tested include:

| Designation | Metal Alloy |
|---|---|
| 316SS | Stainless Steel |
| 3003 | Aluminum |
| 2205 | Duplex Stainless Steel |
| H-13 | Hardenable Tool Steel |
| 17-4ph | Precipitate-Hardened Stainless Steel |
| Zr | Zirconium |
| eN0001 | Electroless Nickel |

(continued)

| Designation | Metal Alloy |
|---|---|
| eN00005 | Standard phosphate level Electroless Nickel |
| Chrome | Chrome-plated Steel |
| Stellite 6 | Nickel Hardened Alloy |
| Copper | Copper |

The metal coupons were prepared from metal or alloy plates having a thickness of 0.30 cm (0.118 inches). The metal coupons were prepared by the cutting the plates to a length of (1 inch) and a width of 1.59 cm (0.625 inches). The actual dimensions of each coupon were measured to 0.0025 cm (+/-0.001 inches). Each coupon was then (1) cleansed with soap and water, (2) degreased with acetone, and (3) weighed to +/-0.0001 grams.

Next, the coupons were inserted into an Inconel ampoule, which was fabricated using a 5.08 cm (2-inch) long by 1.91 (0.75-inch) diameter pipe section, a top pipe any a bottom pipe cap. A 5.08 (2-inch) long by 0.64 cm (0.25-inch) diameter tube was welded into the top pipe cap with the free end of the tubing flattened and welded. An insulating coupon "chair" was fabricated from a button of Teflon™ fluoropolymer resin into which a 0.32 cm (0.125-inch) groove was milled. The button was prepared such that the coupon would stand up and be immersed in the composition containing the corrosive reagent while the coupon did not touch the sides or bottom of the ampoule.

Each ampoule was placed into a high-temperature oven at the desired evaluation temperature for a period of 7 days. The time period did not include the heat-up and cool-down times. After the ampoules were cooled following exposure, each ampoule was disassembled.

Each coupon was again cleaned and degreased. Then, the coupon (with surface corrosion removed) was weighed to +/-0.0001 grams. The resulting weight loss was determined as equivalent loss in thickness rate (MPY) and calculated using the following equation:

$$\text{Loss (MPY)} = \frac{[(\text{Delta weight (grams)}/\text{Density (grams/cm}^3)((\text{grams/cu-inch}))) * 1000 (\text{mm/cm})((\text{mils/inch}))]}{\text{Surface area (cm}^2) ((\text{sq-inch})) * \text{Exposure time (hours)} * 8544 (\text{hours/year})}$$

Comparative Example 1 and Examples 2-4: H13 Steel Metal Coupon

The corrosive impact of an alkyl aromatic sulfonic acid in polymeric composition was determined using the same method as employed for metal alloy evaluation as described above with the evaluation temperature and time period being changed. For these examples, the alkyl aromatic sulfonic acid was also the previously described NACURE™ B201 available from King Industries.

Each of the exemplified polymeric compositions was prepared with 46.15 weight percent of AMPLIFY EA100™ ethylene ethylacrylate copolymer, 46.15 weight percent of a linear low density polyethylene, 4.0 weight percent of Lowinox 221846™ isobutylidene bis-(4,6-dimethylphenol), and 0.7 weight percent of oxalyl bis (benzylidine hydrazide) ("OABH").

AMPLIFY EA100™ ethylene ethylacrylate copolymer is available from The Dow Chemical Company, having a melt index of 1.5 grams/10 minutes and ethylacrylate concentration of 15 weight percent. The linear low density polyethylene was a copolymer of 1-butene and ethene, having a melt index of 0.7 grams/10 minutes and a density of 0.92 grams/cubic centimeter. Lowinox 22IB46™ isobutylidene bis-(4,6-dimethylphenol) is an antioxidant available from Great Lakes Chemicals Corporation. OABH is a metal deactivator available from Eastman Chemical Company.

Each of the exemplified compositions also contained 3 weight percent of the alkyl aromatic sulfonic acid, which was non-doped or doped depending on which polymeric composition was exemplified. Comparative Example 1 used the non-doped sulfonic acid. Each of the doped sulfonic acidic polymeric compositions contained 10 parts per million (ppm) of an evaluated corrosion inhibitor. The corrosion inhibitor for Example 2 was Fomrez SUL-4™ dibutyl tin dilaurate ("DBTDL") available from the Crompton Company. For Example 3, the corrosion inhibitor was tin sulfate from Aldrich Chemical Company. For Example 4, the corrosion inhibitor was A120™ antimony oxide available from HydroChem Laboraties, Inc.

Each of the metal coupons had an initial total area of (1.903 sq-inches). The metal coupons were placed in the polymeric composition at 140 degrees Celsius for a 24-hour period. After the ampoules were cooled following exposure to the polymeric composition, each ampoule was disassembled and the metal coupon was enwrapped with the then-solidified polymer. The coupon was recovered by breaking the polymer away from the coupon's surface. Then the coupon was cleaned by immersing the coupon in an A120-inhibited acid solution, washing the coupon, and degreasing/drying the coupon with acetone. After the surface corrosion was removed, each coupon was weighed. The metal coupons were weighed prior to and after placement in the polymeric composition to determine the corrosion rate in mm per year (mils per year (MPY)).

The results are reported in Table 1 below,

TABLE 1

| | Comp. Ex. 1 | Example 2 | Example 3 | Example 4 |
|---|---|---|---|---|
| Corrosion Inhibitor | None | DBTDL | Tin sulfate | AT-120 |
| Initial Weight (g) | 10.5633 | 10.6103 | 10.5744 | 10.7511 |
| Final Weight (g) | 10.5571 | 10.6061 | 10.5728 | 10.7497 |
| Delta Weight (g) | 0.0062 | 0.0042 | 0.0016 | 0.0014 |
| Corrosion Rate (mm per year) (MPY) | 0.054 (2.1187) | 0.037 (1.4352) | 0.014 (0.5468) | 0.012 (0.4784) |

## Claims

1. A polymeric composition comprising:

    a. a polymer selected from the group consisting of acrylamido polymers, acrylate polymers, carboxylic acid polymers, epoxy polymers, methacrylate polymers, olefinic polymers, polyamide polymers, polycarbonates, polyesters, polyurethanes, polyvinyl chloride polymers, polyvinylidene chloride polymers, siloxane polymers, styrenic polymers, thermoplastic urethanes, and vinyl acetate polymers.
    b. a cathodic corrosion inhibitor selected from the group consisting of Group IVA metals, Group VA metals, salts of the preceding metals, and metal salts of the corrosive reagent, and
    c. an acidic corrosive reagent which is an acidic silanol condensation catalyst selected from the group consisting of (a) organic sulfonic acids and hydrolyzable precursors thereof, (b) organic phosphonic acids and hydrolyzable precursors thereof, and (c) halogen acids.

2. The polymeric composition of Claim 1 wherein the cathodic corrosion inhibitor is selected from the group consisting of antimony, arsenic, , tin and salts of the preceding metals.

3. The polymeric composition of Claim 1 wherein the cathodic corrosion inhibitor inhibits corrosion during processing of the polymeric composition.

4. The polymeric composition of Claim 1 wherein the cathodic corrosion inhibitor inhibits corrosion after fabricating the polymeric composition into an article of manufacture.

5. The polymeric composition of Claim 1 wherein the acidic corrosive reagent is selected from the group consisting of (i) direct addition components, (ii) products resulting from a reaction of components directly added to the polymeric composition, (iii) products resulting from a reaction of a component directly added to the polymeric composition with a reactive species brought into contact with the component, and (iv) a corrosive species brought into contact with the polymeric composition.

6. The polymeric composition of Claim 1 wherein

    a. the polymer is a silane-functionalized polymer selected from the group consisting of (i) a copolymer of ethylene and a hydrolyzable silane, (ii) a copolymer of ethylene, a hydrolyzable silane, and one or more C3 or higher alpha-olefins and unsaturated esters, (iii) a homopolymer of ethylene, having a hydrolyzable silane grafted to its backbone, and (iv) a copolymer of ethylene and one or more C3 or higher alpha-olefins and unsaturated esters, having a hydrolyzable silane grafted to its backbone;
    b. the cathodic corrosion inhibitor is selected from the group consisting of antimony, arsenic, tin and, salts of the preceding metals, and metal salts of the acidic silanol condensation catalyst; and
    c. the acidic corrosive reagent is an acidic silanol condensation catalyst selected from the group consisting of alkylaryl sulfonic acids, arylalkyl sulfonic acids, and alkylated aryl disulfonic acids,

wherein the polymer composition is moisture-crosslinkable.

7. A wire or cable construction prepared by applying the polymeric composition of Claim 1 over a wire or cable.

8. An article of manufacture prepared by applying the polymeric composition of Claim 1 over a metal substrate.


**Patentansprüche**

1. Eine polymere Zusammensetzung, die Folgendes beinhaltet:

   a. ein Polymer, ausgewählt aus der Gruppe, bestehend aus Acrylamidopolymeren, Acrylatpolymeren, Carbonsäurepolymeren, Epoxidpolymeren, Methacrylatpolymeren, olefinischen Polymeren, Polyamidpolymeren, Polycarbonaten, Polyestern, Polyurethanen, Polyvinylchloridpolymeren, Polyvinylidenchloridpolymeren, Siloxanpolymeren, Styrolpolymeren, thermoplastischen Urethanen und Vinylacetatpolymeren,
   b. einen kathodischen Korrosionsinhibitor, ausgewählt aus der Gruppe, bestehend aus Gruppe-IVA-Metallen, Gruppe-VA-Metallen, Salzen der vorgenannten Metalle und Metallsalzen des korrosiven Reagenzes, und
   c. ein saures korrosives Reagenz, das ein saurer Silanolkondensationskatalysator ist, ausgewählt aus der Gruppe, bestehend aus (a) organischen Sulfonsäuren und hydrolysierbaren Vorläufern davon, (b) organischen Phosphonsäuren und hydrolysierbaren Vorläufern davon und (c) Halogensäuren.

2. Polymere Zusammensetzung gemäß Anspruch 1, wobei der kathodische Korrosionsinhibitor ausgewählt ist aus der Gruppe, bestehend aus Antimon, Arsen, Zinn und Salzen der vorgenannten Metalle.

3. Polymere Zusammensetzung gemäß Anspruch 1, wobei der kathodische Korrosionsinhibitor während des Verarbeitens der polymeren Zusammensetzung Korrosion inhibiert.

4. Polymere Zusammensetzung gemäß Anspruch 1, wobei der kathodische Korrosionsinhibitor nach dem Fertigen der polymeren Zusammensetzung zu einem hergestellten Artikel Korrosion inhibiert.

5. Polymere Zusammensetzung gemäß Anspruch 1, wobei das saure korrosive Reagenz ausgewählt ist aus der Gruppe, bestehend aus (i) Direktadditionskomponenten, (ii) Produkten, die sich aus einer Reaktion von direkt zu der polymeren Zusammensetzung hinzugefügten Komponenten ergeben, (iii) Produkten, die sich aus einer Reaktion einer direkt zu der polymeren Zusammensetzung hinzugefügten Komponente mit einer reaktiven Spezies, die mit der Komponente in Kontakt gebracht wird, ergeben, und (iv) einer korrosiven Spezies, die mit der polymeren Zusammensetzung in Kontakt gebracht wird.

6. Polymere Zusammensetzung gemäß Anspruch 1, wobei:

   a. das Polymer ein silanfunktionalisiertes Polymer ist, ausgewählt aus der Gruppe, bestehend aus (i) einem Copolymer von Ethylen und einem hydrolysierbaren Silan, (ii) einem Copolymer von Ethylen, einem hydrolysierbaren Silan und einem oder mehreren C3- oder höheren Alpha-Olefinen und ungesättigten Estern, (iii) einem Homopolymer von Ethylen, das ein auf seine Hauptkette aufgepfropftes hydrolysierbares Silan aufweist, und (iv) einem Copolymer von Ethylen und einem oder mehreren C3- oder höheren Alpha-Olefinen und ungesättigten Estern, das ein auf seine Hauptkette aufgepfropftes hydrolysierbares Silan aufweist;
   b. der kathodische Korrosionsinhibitor ausgewählt ist aus der Gruppe, bestehend aus Antimon, Arsen, Zinn und Salzen der vorgenannten Metalle und Metallsalzen des sauren Silanolkondensationskatalysators; und
   c. das saure korrosive Reagenz ein saurer Silanolkondensationskatalysator ist, ausgewählt aus der Gruppe, bestehend aus Alkylarylsulfonsäuren, Arylalkylsulfonsäuren und alkylierten Aryldisulfonsäuren,

   wobei die Polymerzusammensetzung feuchtevernetzbar ist.

7. Eine Draht- oder Kabelkonstruktion, die durch Auftragen der polymeren Zusammensetzung gemäß Anspruch 1 über einen Draht oder ein Kabel angefertigt wird.

8. Ein hergestellter Artikel, der durch Auftragen der polymeren Zusammensetzung gemäß Anspruch 1 über ein Metallsubstrat angefertigt wird.

**Revendications**

1. Une composition polymère comprenant :

   a. un polymère sélectionné dans le groupe consistant en des polymères d'acrylamide, des polymères d'acrylate, des polymères d'acide carboxylique, des polymères époxy, des polymères de méthacrylate, des polymères oléfiniques, des polymères de polyamide, des polycarbonates, des polyesters, des polyuréthanes, des polymères de chlorure de polyvinyle, des polymères de chlorure de polyvinylidène, des polymères de siloxane, des polymères styréniques, des uréthanes thermoplastiques, et des polymères d'acétate de vinyle.
   b. un inhibiteur de corrosion cathodique sélectionné dans le groupe consistant en des métaux du Groupe IVA, des métaux du groupe VA, des sels des métaux précédents, et des sels métalliques du réactif corrosif, et
   c. un réactif corrosif acide qui est un catalyseur de condensation de silanol acide sélectionné dans le groupe consistant en (a) des acides sulfoniques organiques et des précurseurs hydrolysables de ceux-ci, (b) des acides phosphoniques organiques et des précurseurs hydrolysables de ceux-ci, et (c) des acides halogénés.

2. La composition polymère de la revendication 1 dans laquelle l'inhibiteur de corrosion cathodique est sélectionné dans le groupe consistant en l'antimoine, l'arsenic, l'étain et des sels des métaux précédents.

3. La composition polymère de la revendication 1 dans laquelle l'inhibiteur de corrosion cathodique inhibe la corrosion durant le traitement de la composition polymère.

4. La composition polymère de la revendication 1 dans laquelle l'inhibiteur de corrosion cathodique inhibe la corrosion après élaboration de la composition polymère en un article de fabrication.

5. La composition polymère de la revendication 1 dans laquelle le réactif corrosif acide est sélectionné dans le groupe consistant en (i) des constituants d'ajout direct, (ii) des produits résultant d'une réaction de constituants directement ajoutés à la composition polymère, (iii) des produits résultant d'une réaction d'un constituant directement ajouté à la composition polymère avec une espèce réactive amenée en contact avec le constituant, et (iv) une espèce corrosive amenée en contact avec la composition polymère.

6. La composition polymère de la revendication 1 dans laquelle

   a. le polymère est un polymère à fonctionnalité silane sélectionné dans le groupe consistant en (i) un copolymère d'éthylène et d'un silane hydrolysable, (ii) un copolymère d'éthylène, d'un silane hydrolysable, et d'un(e) ou de plusieurs esters insaturés et alpha-oléfines en C3 ou plus, (iii) un homopolymère d'éthylène, ayant un silane hydrolysable greffé sur son squelette, et (iv) un copolymère d'éthylène et d'un(e) ou de plusieurs esters insaturés et alpha-oléfines en C3 ou plus, ayant un silane hydrolysable greffé sur son squelette ;
   b. l'inhibiteur de corrosion cathodique est sélectionné dans le groupe consistant en l'antimoine, l'arsenic, l'étain et des sels des métaux précédents, et des sels métalliques du catalyseur de condensation de silanol acide ; et
   c. le réactif corrosif acide est un catalyseur de condensation de silanol acide sélectionné dans le groupe consistant en des acides sulfoniques d'alkylaryle, des acides sulfoniques d'arylalkyle, et des acides disulfoniques d'aryle alkylés,

   la composition polymère étant réticulable à l'humidité.

7. Une structure de fil ou de câble préparée en appliquant la composition polymère de la revendication 1 par-dessus un fil ou un câble.

8. Un article de fabrication préparé en appliquant la composition polymère de la revendication 1 par-dessus un substrat en métal.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9517463 A
- WO 0212354 A
- WO 0212355 A

**Non-patent literature cited in the description**

- POLYPROPYLENE HANDBOOK: POLYMERIZATION, CHARACTERIZATION, PROPERTIES, PROCESSING, APPLICATIONS. 1996, vol. 3-14, 113-176